# EUROPEAN PATENT APPLICATION

(11) **EP 4 625 928 A1**
(43) Date of publication of application: **01.10.2025**
(21) Application number: 23909952.6
(22) Date of filing: 01.12.2023
(51) Int. Cl.: H04L 41/16, H04W 24/10

(54) **COMMUNICATION METHOD AND APPARATUS, AND READABLE STORAGE MEDIUM AND CHIP SYSTEM**

(30) Priority: 30.12.2022 CN 202211727810
(71) Applicant: Huawei Technologies Co., Ltd., Shenzhen, Guangdong 518129 (CN)
(72) Inventor: GENG, Tingting, Shenzhen, Guangdong 518129 (CN)
(74) Representative: Körber, Martin Hans
(86) International application number: PCT/CN2023/135831
(87) International publication number: WO 2024/140022

(57) **Abstract**

This application provides a communication method and apparatus, a readable storage medium, and a chip system, to resolve a problem that accuracy of AI model training, inference, or optimization is not high due to poor adaptation of a training data feature to an AI model. In this application, a terminal device sends radio information to a network device, where the radio information is measurement information obtained by the terminal device (UE); and the terminal device further sends non-radio information to the network device, where the non-radio information is non-radio information corresponding to the radio information, and the non-radio information indicates physical environment information related to the radio information. Because the non-radio information can represent the physical environment information related to the radio information, the network device can obtain, based on the non-radio information and the radio information, training data that matches an AI model, so that accuracy of AI model training, inference, or optimization can be improved.

## Description

### TECHNICAL FIELD

This application relates to the field of communication technologies, and in particular, to a communication method and apparatus, a readable storage medium, and a chip system.

### BACKGROUND

Artificial intelligence (Artificial Intelligence, AI) is a technology that has been proposed in the 1950s to simulate a human brain for complex computing. With improvement of data storage and computing capabilities, AI is increasingly used. The 3rd Generation Partnership Project (3rd Generation Partnership Project, 3GPP) proposes application of AI to new radio (New Radio, NR), including application to a terminal device or a network device. During a life cycle management periodicity of an AI function, an AI model can be trained by intelligently collecting data, to improve accuracy and a computing speed of AI inference, and improve training network performance and user experience. Therefore, an AI data collection technology needs to be further studied.

### SUMMARY

This application provides a communication method and apparatus, a readable storage medium, and a chip system.

According to a first aspect, an embodiment of this application provides a communication method. The method may be performed by a terminal device or a unit, a module, or a chip in the terminal device. In this embodiment of this application, an example in which the method is performed by the terminal device is used for description. The method includes: The terminal device sends radio information, where the radio information is measurement information obtained by the terminal device. The terminal device sends non-radio information to a network device, where the non-radio information is non-radio information corresponding to the radio information, and the non-radio information indicates physical environment information related to the radio information.

Based on the method, the terminal device can send the non-radio information to the network device, the non-radio information indicates the physical environment information related to the radio information, and the network device can obtain, based on the non-radio information and the radio information, training data that matches an AI model, to improve accuracy of AI model training and inference.

With reference to the first aspect, in a possible implementation of the first aspect, the non-radio information includes at least one of the following: location information of the terminal device, device information of the terminal device, channel type information of the terminal device, antenna configuration information of a cell, network deployment information, cell configuration information, beam configuration information, or bandwidth part BWP information. In this way, the radio information can be processed based on different types of non-radio information, to obtain training data that better matches the AI model.

With reference to the first aspect, in a possible implementation of the first aspect, the radio information includes at least one of the following: cell measurement result information, beam measurement result information, channel state information CSI feedback information, or positioning information.

With reference to the first aspect, in a possible implementation of the first aspect, the terminal device receives first indication information, where the first indication information indicates whether to report the non-radio information.

With reference to the first aspect, in a possible implementation of the first aspect, the terminal device further receives the antenna configuration information of the cell and/or the network deployment information.

With reference to the first aspect, in a possible implementation of the first aspect, the terminal device receives change configuration information of the non-radio information, where the change configuration information indicates condition information for determining whether to report the non-radio information; and if the terminal device determines that the condition information is satisfied, the terminal device sends changed non-radio information. In this way, it can be determined, based on the change configuration information, to send the changed non-radio information, to avoid frequent sending of the non-radio information, and reduce signaling.

With reference to the first aspect, in a possible implementation of the first aspect, the change configuration information includes at least one triggering condition configuration and second indication information, and the second indication information indicates combination information corresponding to the at least one triggering condition configuration.

With reference to the first aspect, in a possible implementation of the first aspect, the combination information includes at least one of the following: any piece of the non-radio information satisfies the triggering condition configuration; each piece of the non-radio information satisfies the triggering condition configuration; or at least two pieces of the non-radio information satisfy the triggering condition configuration.

With reference to the first aspect, in a possible implementation of the first aspect, the terminal device receives centralized reporting configuration information, where the centralized reporting configuration information indicates the terminal device to send the radio information and/or the non-radio information in a centralized reporting manner, and the centralized reporting manner is that the terminal device collects the radio information and/or the non-radio information for a period of time or collects at least one piece of the radio information and/or the non-radio information in a connected state, and sends the radio information and/or the non-radio information in the connected state. In this way, the terminal device can send the radio information and/or the non-radio information in the centralized reporting manner, to reduce signaling.

With reference to the first aspect, in a possible implementation of the first aspect, that the terminal device sends the radio information and/or the non-radio information in the centralized reporting manner includes: When storage of the radio information and/or the non-radio information reaches a quantity threshold, or when storage of the radio information and/or the non-radio information reaches a capacity threshold, the terminal device sends the radio information and/or the non-radio information in the centralized reporting manner.

With reference to the first aspect, in a possible implementation of the first aspect, the centralized reporting configuration information includes at least one of the following: reporting periodicity information, recording interval information, recording time range information, recording condition information, triggering condition configuration information for centralized reporting, a recorded data type, or effective area information for centralized reporting.

With reference to the first aspect, in a possible implementation of the first aspect, the triggering condition configuration information for centralized reporting includes the quantity threshold or the capacity threshold.

With reference to the first aspect, in a possible implementation of the first aspect, the terminal device receives delayed reporting configuration information, where the delayed reporting configuration information indicates the terminal device to record the radio information and/or the non-radio information based on the delayed reporting configuration information if the terminal device enters a non-connected state. In this way, the terminal device can send the radio information and/or the non-radio information in a delayed reporting manner, to reduce signaling.

With reference to the first aspect, in a possible implementation of the first aspect, the delayed reporting configuration information includes at least one of the following: reporting periodicity information, recording time range information, recording interval information, recording condition information, recorded data type, triggering condition configuration information for delayed reporting, or effective area information for delayed reporting.

With reference to the first aspect, in a possible implementation of the first aspect, the terminal device determines that the triggering condition corresponding to the triggering condition configuration information for delayed reporting is satisfied, and then the terminal device records the radio information and/or the non-radio information based on the delayed reporting configuration information.

With reference to the first aspect, in a possible implementation of the first aspect, the recorded triggering condition configuration information for delayed reporting includes at least one of quality threshold information, a channel type of the terminal device, location information of the terminal device, or other non-radio information related to the terminal device.

According to a second aspect, an embodiment of this application provides a communication method. The method may be performed by a network device or a unit, a module, or a chip in the network device. In this embodiment of this application, an example in which the method is performed by the network device is used for description. The method includes: The network device receives radio information, where the radio information is measurement information obtained by a terminal device. The network device receives non-radio information, where the non-radio information is non-radio information corresponding to the radio information, and the non-radio information indicates physical environment information related to the radio information.

Based on the method, the network device can receive the non-radio information, the non-radio information indicates the physical environment information related to the radio information, and the network device can obtain, based on the non-radio information and the radio information, training data that matches an AI model, to improve accuracy of AI model training and inference.

With reference to the second aspect, in a possible implementation of the second aspect, the non-radio information includes at least one of the following: location information of the terminal device, device information of the terminal device, channel type information of the terminal device, antenna configuration information of a cell, network deployment information, cell configuration information, beam configuration information, or bandwidth part BWP information. In this way, the radio information can be processed based on different types of non-radio information, to obtain training data that better matches the AI model.

With reference to the second aspect, in a possible implementation of the second aspect, the radio information includes at least one of the following: cell measurement result information, beam measurement result information, channel state information CSI feedback information, or positioning information.

With reference to the second aspect, in a possible implementation of the second aspect, the network device classifies the radio information based on the non-radio information, to obtain a dataset used for artificial intelligence AI model processing. In this way, the network device can obtain, based on the non-radio information and the radio information, training data that matches the AI model, to improve accuracy of AI model training, inference, or update.

With reference to the second aspect, in a possible implementation of the second aspect, the network device performs AI model training, inference, or update based on the dataset. In this way, the network device can obtain, based on the non-radio information and the radio information, training data that matches the AI model, to improve accuracy of AI model training, inference, or update.

With reference to the second aspect, in a possible implementation of the second aspect, the network device sends first indication information to the terminal device, where the first indication information indicates whether to report the non-radio information.

With reference to the second aspect, in a possible implementation of the second aspect, the network device sends antenna configuration information of a cell and/or network deployment information to the terminal device.

With reference to the second aspect, in a possible implementation of the second aspect, the network device sends change configuration information of the non-radio information to the terminal device, where the change configuration information indicates condition information for determining whether to report the non-radio information. In this way, the terminal device can determine, based on the change configuration information, to send changed non-radio information, to avoid frequent sending of the non-radio information, and reduce signaling.

With reference to the second aspect, in a possible implementation of the second aspect, the change configuration information includes at least one triggering condition configuration and second indication information, and the second indication information indicates combination information corresponding to the at least one triggering condition configuration.

With reference to the second aspect, in a possible implementation of the second aspect, the combination information includes at least one of the following: any piece of the non-radio information satisfies the at least one triggering condition configuration; each piece of the non-radio information satisfies the at least one triggering condition configuration; or at least two pieces of the non-radio information satisfy the at least one triggering condition configuration.

With reference to the second aspect, in a possible implementation of the second aspect, the network device sends centralized reporting configuration information to the terminal device, where the centralized reporting configuration information indicates the terminal device to send the radio information and/or the non-radio information in a centralized reporting manner. In this way, the terminal device can send the radio information and/or the non-radio information in the centralized reporting manner, to reduce signaling.

With reference to the second aspect, in a possible implementation of the second aspect, the centralized reporting configuration information includes at least one of the following: reporting periodicity information, recording interval information, recording time range information, recording condition information, triggering condition configuration information for centralized reporting, a recorded data type, or effective area information for centralized reporting.

With reference to the second aspect, in a possible implementation of the second aspect, the triggering condition configuration information for centralized reporting includes a quantity threshold or a capacity threshold.

With reference to the second aspect, in a possible implementation of the second aspect, the network device sends delayed reporting configuration information to the terminal device, where the delayed reporting configuration information indicates the terminal device to send the radio information and/or the non-radio information in a delayed reporting manner. In this way, the terminal device can send the radio information and/or the non-radio information in the delayed reporting manner, to reduce signaling.

With reference to the second aspect, in a possible implementation of the second aspect, the delayed reporting configuration information includes at least one of the following: reporting periodicity information, recording time range information, recording interval information, recording condition information, a recorded data type, triggering condition configuration information for delayed reporting, or effective area information for delayed reporting.

With reference to the second aspect, in a possible implementation of the second aspect, the triggering condition configuration information for delayed reporting includes at least one of quality threshold information, a channel type of the terminal device, location information of the terminal device, or other non-radio information related to the terminal device.

With reference to the second aspect, in a possible implementation of the second aspect, the network device receives radio information and/or corresponding non-radio information from another network device.

According to a third aspect, an embodiment of this application provides a communication apparatus, and the communication apparatus is the foregoing network device or terminal device. The apparatus may include a communication unit and a processing unit, to perform any implementation of any communication method in the first aspect and the second aspect. The communication unit is configured to perform functions related to sending and receiving. Optionally, the communication unit includes a receiving unit and a sending unit. In a design, the communication apparatus is a communication chip, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that may be configured to perform any implementation of any communication method in the first aspect and the second aspect.

According to a fourth aspect, an embodiment of this application provides a communication apparatus, and the communication apparatus is the foregoing network device or terminal device. The apparatus may include a processor and a memory. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is caused to perform any implementation of any communication method in the first aspect and the second aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to a fifth aspect, an embodiment of this application provides a communication apparatus. The communication apparatus is the foregoing network device or terminal device (for example, a first terminal device). The apparatus may include a processor. The processor is coupled to a memory, and may be configured to perform the method according to either of the first aspect and the second aspect and any possible implementation of the first aspect and the second aspect. Optionally, the communication apparatus further includes the memory. Optionally, the communication apparatus further includes a communication interface, and the processor is coupled to the communication interface.

In an implementation, the communication apparatus is a terminal device. When the communication apparatus is the terminal device, the communication interface may be a transceiver or an input/output interface. Optionally, the transceiver may be a transceiver circuit. Optionally, the input/output interface may be an input/output circuit.

In another implementation, the communication apparatus is a network device. When the communication apparatus is the network device, the communication interface may be a transceiver or an input/output interface. Optionally, the transceiver may be a transceiver circuit. Optionally, the input/output interface may be an input/output circuit.

In still another implementation, the communication apparatus is a chip or a chip system. When the communication apparatus is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a sixth aspect, an embodiment of this application provides a computer-readable storage medium. The computer-readable medium stores a computer program (which may also be referred to as code or instructions). When the computer program is run on a computer, the computer is caused to perform the method according to any possible implementation of the first aspect, or perform the method according to any implementation of the first aspect and the second aspect.

According to a seventh aspect, an embodiment of this application provides a computer program product. The computer program product includes a computer program (which may also be referred to as code or instructions). When the computer program is run, a computer is caused to perform the method according to any possible implementation of the first aspect, or the computer is caused to perform the method according to any implementation of the first aspect and the second aspect.

According to an eighth aspect, an embodiment of this application provides a chip system. The chip system may include a processor. The processor is coupled to a memory, and may be configured to perform the method in any one of the first aspect and the second aspect and any one of the possible implementations of any one of the first aspect and the second aspect. Optionally, the chip system further includes the memory. The memory is configured to store a computer program (which may also be referred to as code or instructions). The processor is configured to invoke the computer program from the memory and run the computer program, to cause a device on which the chip system is installed to perform the method according to any one of the first aspect and the second aspect and any one of the possible implementations of any one of the first aspect and the second aspect.

According to a ninth aspect, an embodiment of this application provides a processing apparatus, including an input circuit, an output circuit, and a processing circuit. The processing circuit is configured to receive a signal through the input circuit, and transmit a signal through the output circuit, so that the method in either of the first aspect and the second aspect and any one of the possible implementations of the first aspect and the second aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a tenth aspect, an embodiment of this application provides a communication system. The communication system includes the foregoing network device and the foregoing terminal device.

### BRIEF DESCRIPTION OF DRAWINGS

FIG. 1 is a diagram of a possible communication system according to an embodiment of this application;
FIG. 2 is a block diagram of an AI model according to an embodiment of this application;
FIG. 3 is a schematic flowchart of a communication method according to an embodiment of this application;
FIG. 4 is another schematic flowchart of a communication method according to an embodiment of this application;
FIG. 5 is still another schematic flowchart of a communication method according to an embodiment of this application;
FIG. 6 is yet another schematic flowchart of a communication method according to an embodiment of this application;
FIG. 7 is still yet another schematic flowchart of a communication method according to an embodiment of this application;
FIG. 8 is a diagram of a structure of an apparatus according to an embodiment of this application; and
FIG. 9 is a diagram of a structure of another apparatus according to an embodiment of this application.

### DESCRIPTION OF EMBODIMENTS

The following describes technical solutions of this application with reference to accompanying drawings.

It should be understood that sequence numbers of processes do not mean execution sequences in embodiments of this application. The execution sequences of the processes should be determined based on functions and internal logic of the processes, and should not be construed as any limitation on the implementation processes of embodiments of this application.

It should be understood that, in embodiments of this application, the terms are generally numbered for ease of differentiation, and the numbering does not mean that the terms have differences in order or priority. For example, in "first indication information" and "second indication information", "first" and "second" are usually used to distinguish only the two groups of information, and should not constitute a limitation on an implementation process of embodiments of this application.

It should be understood that in embodiments of this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may represent: a, b, c, a and b, a and c, b and c, or a, b, and c, where a, b, and c may be singular or plural.

It should be understood that the terms "system" and "network" in embodiments of this application are usually used interchangeably in this specification.

It should be understood that the term "and/or" in embodiments of this application usually describes an association relationship for describing associated objects and represents that three relationships may exist. For example, A and/or B may represent the following three cases: Only A exists, both A and B exist, and only B exists. It should be understood that the character "/" in embodiments of this application usually indicates an "or" relationship between associated objects.

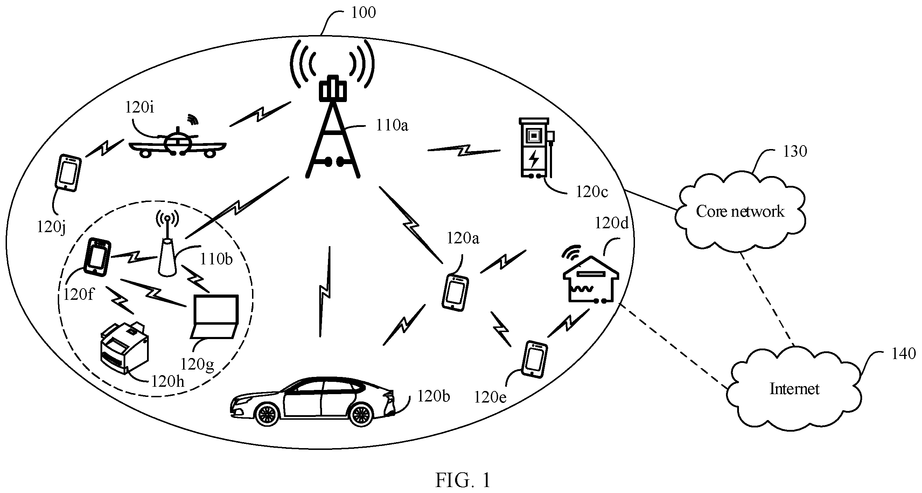

FIG. 1 is a diagram of an architecture of a communication system to which an embodiment of this application is applied. As shown in FIG. 1, the communication system includes a radio access network 100 and a core network 130. Optionally, the communication system may further include an internet 140. The radio access network 100 may include at least one network device (for example, 110a and 110b in FIG. 1), and may further include at least one terminal (for example, 120a to 120j in FIG. 1). The terminal is connected to the network device in a wireless manner, and the network device is connected to the core network in a wireless manner or a wired manner. A core network device and the network device may be different devices independent of each other; functions of the core network device and logical functions of the network device may be integrated into a same device; or some functions of the core network device and some functions of the network device may be integrated into one device. Terminals may be connected to each other in a wired or wireless manner, and network devices may be connected to each other in a wired or wireless manner. FIG. 1 is merely a diagram. The communication system may further include another network device, for example, may further include a relay device and a backhaul device, which are not shown in FIG. 1.

A method and an apparatus that are provided in embodiments of this application may be used in various communication systems, for example, a 4th generation (4th generation, 4G) communication system, a 4.5G communication system, a 5G communication system, a 5.5G communication system, a 6G communication system, a system integrating a plurality of communication systems, or a future evolved communication system, for example, a long term evolution (long term evolution, LTE) system, a new radio (new radio, NR) system, a wireless fidelity (wireless fidelity, Wi-Fi) system, a 3rd generation partnership project (3rd generation partnership project, 3GPP)-related communication system, and another communication system of this type.

The network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6G mobile communication system, a base station in a future mobile communication system, an access node in a Wi-Fi system, a satellite, a high-altitude platform, or the like; or may be a module or a unit that implements some functions of the base station, for example, may be a central unit (central unit, CU), or may be a distributed unit (distributed unit, DU). The network device may be a macro base station (for example, 110a in FIG. 1), may be a micro base station or an indoor base station (for example, 110b in FIG. 1), or may be a relay node, a donor node, or the like. It may be understood that all or some functions of the network device in this application may alternatively be implemented by using a software function running on hardware, or may be implemented by using an instantiated virtualisation function on a platform (for example, a cloud platform). A specific technology and a specific device form that are used by the network device are not limited in embodiments of this application. For ease of description, the following provides descriptions by using an example in which the base station serves as the network device.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), an internet of things (internet of things, IoT), virtual reality, augmented reality, industrial control, self-driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

Alternatively, the terminal in this application may be a VR terminal, an AR terminal, or an MR terminal. The VR terminal, the AR terminal, and the MR terminal each may be referred to as an XR terminal. The XR terminal may be, for example, a head mounted device (for example, a helmet or glasses), may be an all-in-one machine, or may be a television, a display, a car, a vehicle-mounted device, a tablet, or a smart screen. The XR terminal can present XR data to a user, and the user can experience diversified XR services by wearing or using the XR terminal. The XR terminal may access a network in a wireless or wired manner, for example, access the network through the Wi-Fi system, the 5G system, or another system.

The base station and the terminal may be fixed or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

Roles of the base station and the terminal may be relative. For example, the airplane or uncrewed aerial vehicle 120i in FIG. 1 may be configured as a mobile base station. For the terminal 120j that accesses the radio access network 100 through 120i, the terminal 120i is a base station. However, for the base station 110a, 120i is a terminal, that is, 110a and 120i communicate with each other by using a radio air interface protocol. It is clear that communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 1 may be referred to as communication apparatuses having a base station function, and 120a to 120j in FIG. 1 may be referred to as communication apparatuses having a terminal function.

Communication between a base station and a terminal, between base stations, or between terminals may be performed through a licensed spectrum, or may be performed through an unlicensed spectrum, or may be performed through both a licensed spectrum and an unlicensed spectrum. Communication may be performed through a spectrum below 6 gigahertz (gigahertz, GHz), or may be performed through a spectrum above 6 GHz, or may be performed through both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem that includes the function of the base station herein may be a control center in an application scenario of the foregoing terminal, such as a smart grid, an industrial control, a smart transportation, and a smart city. The function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel. The terminal sends an uplink signal or uplink information to the base station, where the uplink information is carried on an uplink channel. The terminal sends a sidelink (sidelink) signal or sidelink information to a terminal, where the sidelink information is carried on a sidelink channel. The information may be control information, or may be data information.

The artificial intelligence (artificial intelligence, AI) can enable machines to have human intelligence, for example, enable the machines to use computer software and hardware to simulate some intelligent human behaviors. To implement the artificial intelligence, a machine learning method may be used. In the machine learning method, a machine obtains a model through learning (or training) by using training data. The model represents mapping from an input to an output. The model obtained through learning may be used for inference (or prediction). To be specific, the model may be used to predict an output corresponding to a given input. The output may also be referred to as an inference result (or a prediction result).

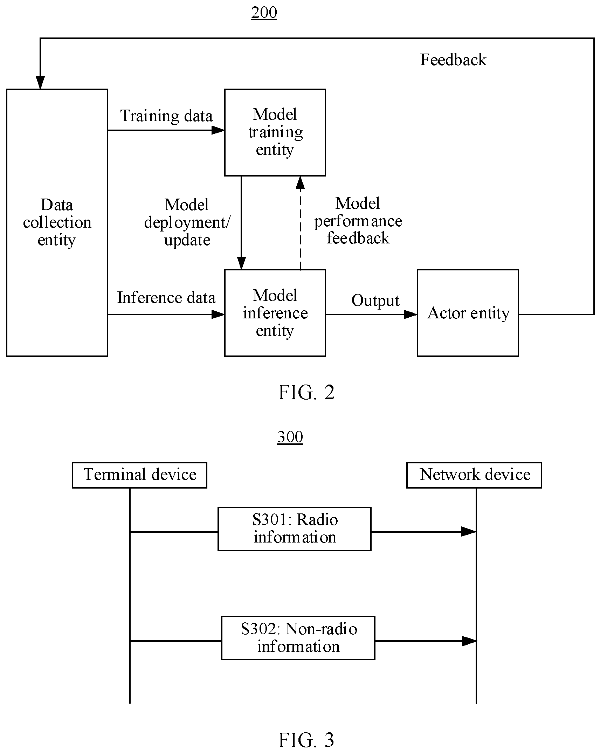

The 3GPP release 18 (Release 18, R18) proposes applying AI in NR and preliminarily defines a framework for applying AI in NR. As shown in FIG. 2, FIG. 2 shows a framework for applying AI in NR. A data collection entity is configured to collect data from a terminal device, a gNB, a CU, a DU, or another network device. A data management network element in the data collection entity may manage the collected data, and generate a dataset. The dataset provides training data for a model training entity. The training data may be used for AI model training, analysis, and inference, or model update. The model training entity analyzes the training data and provides an optimal AI model. A model inference entity uses an AI model to provide AI-based reasonable prediction for network operations or guide a network to perform policy adjustment based on the data provided by the data collection entity. Related policy adjustment is uniformly planned by an actor entity, and is sent to a plurality of network entities for operation. At the same time, after a related policy is applied, specific performance of the network can be input to a database again for storage.

Currently, the 3GPP designs several basic application scenarios for AI application on a RAN side through working groups such as the radio access network (radio access network, RAN) 3 and the RAN 1. The RAN 1 includes channel state information reference signal (channel state information reference signal, CSI-RS) feedback enhancement, beam management enhancement, and positioning enhancement. The foregoing scenarios can be further divided into different sub-scenarios. The following describes a main procedure of each scenario.

### (1) CSI-RS feedback enhancement

A CSI-RS is used to obtain channel state information (channel state information, CSI). The CSI is a channel attribute of a communication link, and is channel quality information reported by a terminal device to a base station. The terminal device reports downlink channel quality information to the base station, so that the base station selects a more appropriate modulation and demodulation scheme for the terminal device. In this way, the terminal device can better adapt to a changed radio channel. CSI reporting information reported by the terminal device includes at least one of the following: a channel quality indicator, a precoding matrix indicator, a CSI-RS resource indicator, a synchronization signal and physical broadcast channel block (synchronization signal and PBCH block, SSB) resource indicator, a layer indicator, a rank indicator, layer 1 reference signal received power, or other information that can represent a CSI channel state. A rank is a rank of an antenna matrix in a multiple-input multiple-output (multiple-input multiple-output, MIMO) technology solution, and represents N parallel valid data flows. The rank indicator indicates a quantity of valid data layers of a PDSCH.

The CSI-RS feedback enhancement may include at least one of scenarios such as CSI compression, CSI prediction, and CSI-RS configuration signaling reduction. The CSI compression may be further classified into compression in at least one of space domain, time domain, or frequency domain. The CSI compression is used as an example, and a possible AI procedure is as follows:
- The base station and the terminal device first exchange an AI model. In an example, the AI model may be trained in advance by the base station based on a capability of the terminal device and a requirement of the base station, and then is delivered to the terminal device.
- The terminal device compresses and quantizes a to-be-fed-back matrix based on a measured channel matrix result and the received AI model, and sends a compressed result to the base station.
- The base station reversely restores an original channel matrix based on the AI model and the data reported by the terminal device.

In this way, an AI technology can be used to improve CSI compression performance, to reduce CSI feedback signaling overheads.

### (2) Beam management enhancement

AI-based beam management enhancement may include sub-scenarios such as beam sweeping matrix prediction and optimal beam prediction. A possible AI procedure for beam management enhancement is as follows:
- An initial model is generated. A specific quantity of terminal devices report results of SSB full beam sweeping, to train a sparse sweeping matrix. This matrix is usually unique to each cell. The trained sparse sweeping matrix is the initial model.
- The base station delivers the sparse sweeping matrix to a terminal device, and the terminal device performs beam sweeping in a P1 phase based on the matrix.
- The base station infers an optimal CSI-RS beam based on a sparse sweeping result of the terminal device, and starts to perform sweeping in a P2 phase on the terminal device. The terminal device feeds back an optimal CSI-RS beam identifier.

### (3) Positioning enhancement

AI-based positioning enhancement mainly aims to improve positioning accuracy. A possible AI procedure for positioning enhancement is as follows:
- A reference terminal device controlled by an operator is used to collect raw data.
- A location management node and a base station train models separately. The model trained by the location management node can infer final positioning (longitude and latitude). The model trained by the base station can infer a line-of-sight (line-of-sight, LOS)/non-line-of-sight (non-line-of-sight, NLOS) determining result.

It can be learned from the foregoing descriptions that an AI model needs to collect a large amount of data for training. Because functions of network environments vary greatly, collected data features are complex, or because functions of AI models vary greatly, the collected data features are not well adapted to an AI model. This affects accuracy of AI model training and inference. Therefore, how to optimize AI-related data collection becomes an urgent problem to be resolved.

In addition, currently, there are two measurement data reporting mechanisms: an immediate reporting mechanism and a delayed reporting mechanism. The immediate reporting mechanism is that the terminal device immediately reports measurement data when an immediate reporting condition is satisfied. The immediate reporting condition may be that a triggering event is satisfied, or may be periodic reporting. The delayed reporting mechanism is as follows: When a terminal device is in a connected state, a network device configures a measurement task for the terminal device; when the terminal device enters a non-connected state, the terminal device performs measurement based on the measurement task, and collects measurement data; and when the terminal device enters the connected state again, the terminal device sends the collected measurement data to the network device.

Because AI model processing requires a large amount of measurement data, the immediate reporting mechanism causes frequent signaling overheads. However, due to the delayed reporting mechanism, the terminal device in the connected state cannot collect measurement data for AI model processing. Therefore, a more proper measurement data (radio data) reporting mechanism needs to be considered. The measurement data may be understood as data used for an AI function, for example, data used for functions such as AI training, AI inference, or AI model update. Correspondingly, the measurement data may also be referred to as radio information, AI data, training data, inference data, or model update data. In an example, training data is used for description in this application. It may be understood that the training data in embodiments of this application may be replaced with any one of the radio information, the measurement data, the AI data, the inference data, or the model update data.

FIG. 3 is a schematic flowchart of a communication method 300 according to an embodiment of this application. In FIG. 3, the method is described by using an example in which a network device and a terminal device are execution bodies of the illustrative interaction. However, the execution bodies of the illustrative interaction are not limited in this application. For example, the network device in FIG. 3 may alternatively be a chip, a chip system, or a processor that supports the network device in implementing the method, or may be a logical module or software that can implement all or some functions of the network device. The terminal device in FIG. 3 may alternatively be a chip, a chip system, or a processor that supports the terminal device in implementing the method, or may be a logical module or software that can implement all or some functions of the terminal. The communication method 300 includes but is not limited to the following steps.

S301: The terminal device sends radio information to the network device.

The radio information is measurement information obtained by the terminal device. The terminal device obtains the measurement information through measurement, and sends the measurement information to the network device for subsequent AI processing of the network device.

S302: The terminal device sends non-radio information to the network device.

The non-radio information corresponds to the radio information, and the non-radio information may represent physical environment information related to the radio information.

It should be understood that the radio information and the non-radio information sent by the terminal device may be carried in a same message, or may be carried in different messages. If the radio information and the non-radio information are sent to the network device through different messages, how the network device associates the radio information with the corresponding non-radio information is not limited in this embodiment of this application. For example, if the network device first receives radio information sent by the terminal device, the network device may request and receive non-radio information reported by the terminal device, and then associate the received non-radio information with the radio information. Alternatively, after the network device first receives non-radio information, the network device may directly associate subsequently received radio information with the previously received non-radio information. Further, if the network device includes a first network device unit (for example, a CU) and a second network device unit (for example, a DU), in a possible implementation, that the terminal device sends the radio information to the network device may be understood as: The terminal device sends the radio information to the first network device unit (or the second network device unit), and the terminal device sends the non-radio information to the second network device unit (or the first network device unit). The first network device unit (or the second network device unit) sends the radio information to the second network device unit (or the first network device unit), so that the second network device unit (or the first network device unit) associates the radio information with the corresponding non-radio information; or the second network device unit (or the first network device unit) sends the non-radio information to the first network device unit (or the second network device unit), so that the first network device unit (or the second network device unit) associates the radio information with the corresponding non-radio information. In another implementation, the terminal device sends the radio information and the non-radio information to the first network device unit (or the second network device unit), and the first network device unit (or the second network device unit) associates the radio information with the corresponding non-radio information; or the first network device unit (or the second network device unit) sends the radio information and the non-radio information to the second network device unit (or the first network device unit), so that the second network device unit (or the first network device unit) associates the radio information with the corresponding non-radio information.

According to the method provided in this embodiment of this application, because the non-radio information can represent the physical environment information related to the radio information, the network device can obtain, based on the non-radio information and the radio information, training data that matches an AI model, to improve accuracy of AI model training and inference. It may be understood that a sequence of performing S301 and S302 is not limited in this embodiment of this application.

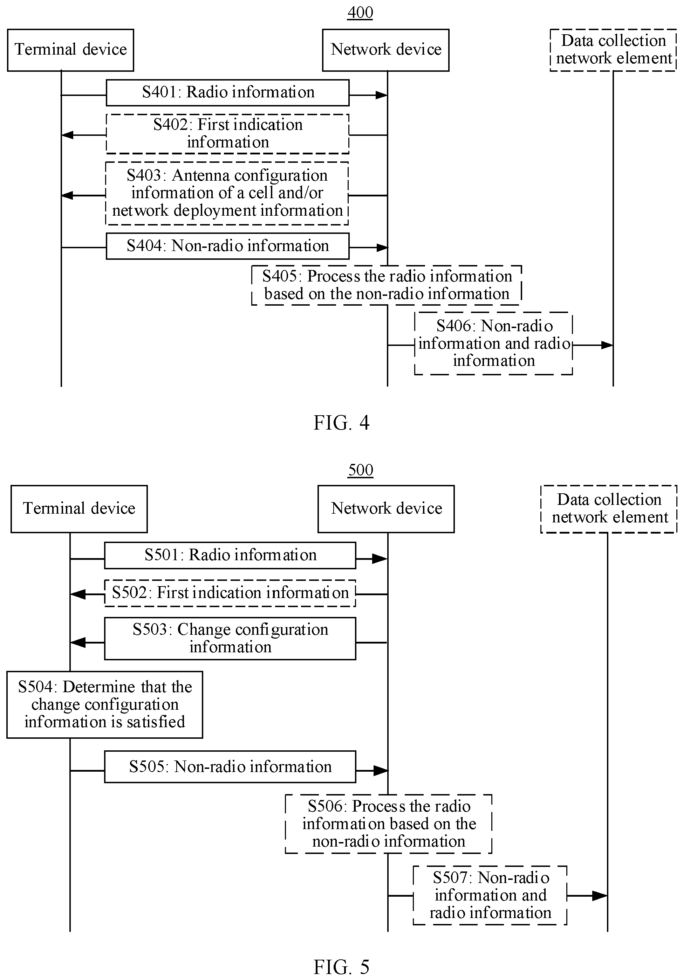

Based on an embodiment of this application corresponding to FIG. 3, FIG. 4 is a schematic flowchart of a communication method 400 according to an embodiment of this application. In FIG. 4, the method is described by using an example in which a network device and a terminal device are execution bodies of the illustrative interaction. However, the execution bodies of the illustrative interaction are not limited in this application. For example, the network device in FIG. 4 may alternatively be a chip, a chip system, or a processor that supports the network device in implementing the method, or may be a logical module or software that can implement all or some functions of the network device. The terminal device in FIG. 4 may alternatively be a chip, a chip system, or a processor that supports the terminal device in implementing the method, or may be a logical module or software that can implement all or some functions of the terminal. The communication method 400 includes but is not limited to the following steps.

S401: The terminal device sends radio information to the network device.

The radio information is measurement information obtained by the terminal device. The radio information may include at least one of the following: cell measurement result information, beam measurement result information, channel state information feedback information, or positioning information. The radio information may be directly used for AI model training, or the radio information is processed and then used for AI model training.

Optionally, in S402, the network device sends first indication information to the terminal device.

The first indication information indicates whether the terminal device reports non-radio information. The non-radio information is non-radio information corresponding to the radio information, and represents physical environment information related to the radio information.

In a possible implementation, the first indication information may be a first value, and the first value indicates the terminal device to send the non-radio information to the network device. For example, the first value may be true or 1, or may be false or 0. If the network device sends the first indication information to the terminal device, the terminal device sends the non-radio information to the network device; and/or if the network device does not send the first indication information to the terminal device, the terminal device does not send the non-radio information by default.

In a possible implementation, the first indication information may be a second value or a third value, the second value indicates the terminal device to send the non-radio information to the network device, and the third value indicates the terminal device not to send the non-radio information to the network device. For example, the second value may be true (or 1). Correspondingly, the third value may be false (or 0).

The non-radio information may include at least one of the following: location information of the terminal device, device information of the terminal device, channel type information of the terminal device, antenna configuration information of a cell, network deployment information, cell configuration information, beam configuration information, or bandwidth part information.

The location information of the terminal device may include at least one of the following: physical location information of the terminal device, identification information of an area in which the terminal device is located, serving beam information of the terminal device, information about whether the terminal device is located indoors or outdoors, moving path information of the terminal device, historical serving cell information of the terminal device, or other location information of the terminal device.

The device information of the terminal device may be vendor information of the terminal device and/or chip vendor information of the terminal device.

The channel type information of the terminal device may indicate that a channel type of the terminal device is NLOS or LOS. The NLOS means non-line-of-sight. When a direct path between the terminal and the base station is blocked by an obstacle, a radio wave can reach a receiving end only after being reflected and diffracted. In this case, measured data, such as arrival time, a time difference, and an incident angle, cannot correctly reflect an actual distance between a transmitting end and the receiving end. This phenomenon is referred to as NLOS propagation. The LOS means line-of-sight. In a line-of-sight condition, a radio wave is propagated along a straight line between a transmitting end and a receiving end without an obstacle. LOS propagation refers to propagation of the radio wave along the straight line.

The antenna configuration information of the cell may include at least one type of the following information: an antenna height, a V-plane half-power beamwidth of an antenna, a quantity of antennas, connection port information, a polarization type, an uplink/downlink downtilt angle, or a quantity of antenna layers. For example, the antenna configuration information of the cell may be one type of information: the antenna height, or may be two types of information: the antenna height and the polarization information, or may be one or more types of other information. This is not limited in this embodiment of this application.

The network deployment information indicates a deployment situation of a cell, and the network deployment information includes at least one type of the following information: whether the cell is an overlay network or a capacity network, a coverage radius of the cell, a coverage distance, or an inter-site distance. For example, the network deployment information may be one type of information: the coverage radius of the cell, or may be two types of information: the coverage radius and the coverage distance of the cell, or may be one or more types of other information. This is not limited in this embodiment of this application.

The configuration information of the cell may include at least one type of the following information: transmit power of the cell, physical cell identification information, or uplink/downlink frequency information. For example, the cell configuration information may be one type of information: the transmit power of the cell, or may be two types of information: the transmit power of the cell and the physical cell identification information, or may be one or more types of other information. This is not limited in this embodiment of this application.

The beam configuration information may include at least one type of the following information: a quantity of beams, a beam sweeping periodicity, a beam direction, beam identifier information, or beam width and narrowness information. For example, the beam configuration may be one type of information: the quantity of beams, or may be two types of information: the quantity of beams and the beam sweeping periodicity of a cell, or may be one or more types of other information. This is not limited in this embodiment of this application.

The bandwidth part information indicates bandwidth part (bandwidth part, BWP) information configured by the network device for the terminal device. The bandwidth part information may include at least one type of the following information: BWP identification information, a subcarrier spacing, bandwidth range information, or cyclic prefix information. For example, the bandwidth part information may be one type of information: the BWP identification information, or may be two types of information: the BWP identification information and the subcarrier spacing, or may be one or more types of other information. This is not limited in this embodiment of this application.

In a possible implementation, the first indication information may indicate the terminal device whether to report at least one piece of the non-radio information. The first indication information may correspond to a plurality of pieces of non-radio information. For example, the non-radio information includes the vendor information of the terminal device and the chip vendor information of the terminal device. The first indication information may correspond to both the vendor information of the terminal device and the chip vendor information of the terminal device. The terminal device reports both the vendor information of the terminal device and the chip vendor information of the terminal device based on the first indication information.

In a possible implementation, the first indication information may be in one-to-one correspondence with the non-radio information. For example, assuming that the device information of the terminal device is the vendor information of the terminal device and the chip vendor information of the terminal device, the first indication information may include first indication information corresponding to the vendor information of the terminal device and first indication information corresponding to the chip vendor information of the terminal device. For example, the first indication information corresponding to the vendor information of the terminal device indicates the terminal device to report the vendor information of the terminal device, and the first indication information corresponding to the chip vendor information of the terminal device indicates the terminal device not to report the chip vendor information of the terminal device. The terminal device reports the vendor information of the terminal device based on the first indication information. In an example, in this scenario, the network device may not send the first indication information corresponding to the chip vendor information of the terminal device.

Optionally, in S403, the network device sends the antenna configuration information of the cell and/or the network deployment information to the terminal device.

Because the antenna configuration information of the cell and the network deployment information are obtained through the network device, the terminal device may report the antenna configuration information of the cell and the network deployment information based on the antenna configuration information of the cell or the network deployment information sent by the network device. According to the method, when the non-radio information reported by the terminal device is invisible to the network device, the terminal device can report the antenna configuration information of the cell or the network deployment information, to ensure that the non-radio information reported by the terminal device is more comprehensive. In this way, the radio information is better processed based on the non-radio information, and accuracy of AI model training and inference is improved.

S404: The terminal device sends the non-radio information to the network device.

For specific information of the non-radio information, refer to the descriptions in S402. Details are not described herein again.

It should be understood that the radio information and the non-radio information sent by the terminal device may be carried in a same message, or may be carried in different messages. If the radio information and the non-radio information are sent to the network device through different messages, how the network device associates the radio information with the corresponding non-radio information is not limited in this embodiment of this application. For example, if the network device sends the first indication information to the terminal device in S402 to indicate the terminal device to report two pieces of non-radio information: the location information of the terminal device and the vendor information of the terminal device, the network device may associate the received non-radio information (the location information of the terminal device and the vendor information of the terminal device) with the radio information. If the network device includes a first network device unit and a second network device unit, for a method for associating the radio information with the corresponding non-radio information by the network device, refer to the descriptions in S302. Details are not described herein again.

Optionally, in S405, the network device processes the radio information based on the non-radio information.

In a possible implementation, the network device classifies the radio information based on the received non-radio information, to obtain a dataset used for AI model processing. For example, the network device receives first radio information and first non-radio information at a moment T1, and receives second radio information and second non-radio information at a moment T2. The non-radio information is specifically information about whether the UE is located indoors or outdoors. For example, the first non-radio information indicates that the terminal device is located outdoors, and the second non-radio information indicates that the terminal device is located outdoors. If the network device determines, based on the information about whether the terminal device is located indoors or outdoors, that physical environment information corresponding to the two pieces of radio information is the same, for example, the terminal device is located indoors or the terminal device is located outdoors, the network device may determine that the first radio information and the second radio information are a same type of data, or may determine to classify the two pieces of radio information into one type of dataset. The dataset may be used by the network device or another network element device to perform AI model processing. It may be understood that the AI model processing may include at least one of AI model training, AI model inference, and AI model update. If the network device needs to perform different AI model processing for an indoor scenario and an outdoor scenario, and determines that the two pieces of radio information are different types of data, the network device performs classification based on the two types of radio information to obtain different datasets, and selects a corresponding AI model for AI model processing, or the network device selects a corresponding dataset based on the AI model.

In a possible implementation, the network device transparently transmits the received non-radio information and the received radio information.

It may be understood that the network device may classify the radio information based on the received non-radio information, to obtain a dataset used for AI model processing, or may only transparently transmit the radio information and the non-radio information, or may send the processed radio information and/or non-radio information to another network entity. For example, the network entity may be a data collection network element. In a possible implementation, this embodiment of this application further includes optional step S406.

Optionally, in S406, the network device sends the non-radio information and the radio information to the data collection network element.

The network device may send the radio information and the corresponding non-radio information to the data collection network element. Similarly, the radio information and the non-radio information may be carried in a same message, or may be carried in different messages.

In a possible implementation, after receiving the radio information and the non-radio information that are sent by the terminal device, the network device directly forwards the received radio information and non-radio information to the data collection network element.

In a possible implementation, after receiving the radio information and the non-radio information that are sent by the terminal device, the network device processes the radio information based on the non-radio information, for example, classifies the radio information based on the non-radio information to obtain a dataset used for artificial intelligence (AI) model processing, and then sends the non-radio information and the dataset to the data collection network element.

According to the method provided in this embodiment of this application, because the non-radio information can represent the physical environment information related to the radio information, the network device can obtain, based on the non-radio information and the radio information, training data that matches an AI model, to improve accuracy of AI model training and inference.

Based on an embodiment of this application corresponding to FIG. 3 or FIG. 4, FIG. 5 is a schematic flowchart of a communication method 500 according to an embodiment of this application. In FIG. 5, the method is described by using an example in which a network device and a terminal device are execution bodies of the illustrative interaction. However, the execution bodies of the illustrative interaction are not limited in this application. For example, the network device in FIG. 5 may alternatively be a chip, a chip system, or a processor that supports the network device in implementing the method, or may be a logical module or software that can implement all or some functions of the network device. The terminal device in FIG. 5 may alternatively be a chip, a chip system, or a processor that supports the terminal device in implementing the method, or may be a logical module or software that can implement all or some functions of the terminal. The communication method 500 includes but is not limited to the following steps.

S501: The terminal device sends radio information to the network device.

For descriptions of the radio information, refer to the descriptions in S401. Details are not described herein again.

Optionally, in S502, the network device sends first indication information to the terminal device.

For descriptions of the first indication information, refer to the descriptions in S402. Details are not described herein again.

S503: The network device sends change configuration information to the terminal device.

The network device sends the change configuration information to the terminal device. The change configuration information indicates condition information based on which the terminal device determines whether to report the non-radio information. If the terminal device determines that the condition information is satisfied, the terminal device sends changed non-radio information to the network device.

The change configuration information includes at least one triggering condition configuration, or at least one triggering condition configuration and second indication information. The second indication information indicates combination information corresponding to the at least one triggering condition configuration. The triggering condition configuration may indicate a change condition of the non-radio information.

In a possible implementation, the at least one triggering condition configuration may be "changing from indoors to outdoors". When the terminal device determines that the non-radio information changes from indoor-related to outdoor-related, the terminal device sends the updated non-radio information to the network device. For example, when the terminal device moves from indoors to outdoors, the non-radio information of the terminal device also correspondingly changes from indoor-related non-radio information to outdoor-related non-radio information. After the terminal device moves to outdoors, if the terminal device determines that the at least one triggering condition configuration is satisfied, the terminal device sends the changed non-radio information, namely, the outdoor-related non-radio information, to the network device.

In a possible implementation, the at least one triggering condition configuration may be "changing from LOS to NLOS". When the terminal device determines that a channel type in the non-radio information changes from LOS to NLOS, the terminal device sends the updated non-radio information to the network device. For example, if the terminal device encounters an obstacle in a moving process, a type of a radio channel between the terminal device and the network device changes from LOS to NLOS, and the non-radio information of the terminal device also correspondingly changes from LOS-related non-radio information to NLOS-related non-radio information. After the channel type of the terminal device changes, the terminal device determines that the at least one triggering condition configuration is satisfied, and the terminal device sends the changed non-radio information, namely, the NLOS-related non-radio information, to the network device.

The second indication information indicates the corresponding combination information of the at least one triggering condition configuration, and when determining that the combination information is satisfied, the terminal device sends the changed non-radio information to the network device. The combination information may include: any piece of the non-radio information satisfies the triggering condition configuration; each piece of the non-radio information satisfies the triggering condition configuration; or at least two pieces of the non-radio information satisfy the triggering condition configuration.

For ease of understanding, the following provides an example. The triggering condition configuration may include three triggering conditions: The terminal device moves from indoors to outdoors, the radio channel type changes from LOS to NLOS, and a quantity of beams increases. That the combination information is that any piece of the non-radio information satisfies the triggering condition configuration may include: The terminal device sends the changed non-radio information to the network device provided that the terminal device determines, based on the non-radio information, that any one of the following conditions is satisfied: the location of the terminal device changes from indoor to outdoor, the radio channel type of the terminal device changes from LOS to NLOS, or the quantity of beams of the terminal device increases. Alternatively, that the combination information is that each piece of the non-radio information satisfies the triggering condition configuration may include: The terminal device sends the changed non-radio information to the network device provided that the terminal device determines, based on the non-radio information, that all the following conditions are satisfied: the location of the terminal device changes from indoor to outdoor, the radio channel type of the terminal device changes from LOS to NLOS, and the quantity of beams of the terminal device increases. Alternatively, that the combination information is that at least two pieces of the non-radio information satisfy the triggering condition configuration may be understood as: The terminal device sends the changed non-radio information to the network device provided that the terminal device determines, based on the non-radio information, that any two of the following conditions are satisfied: the location of the terminal device changes from indoor to outdoor, the radio channel type of the terminal device changes from LOS to NLOS, or the quantity of beams of the terminal device increases. For example, if the terminal device determines, based on the non-radio information, that the location of the terminal device changes from indoor to outdoor, or the radio channel type of the terminal device changes from LOS to NLOS, and the quantity of beams of the terminal device does not change, the terminal device sends the changed non-radio information to the network device. It should be understood that, when the terminal device sends the non-radio information based on the change configuration information, the non-radio information may be sent together with the radio information, or may be sent separately from the radio information. This is not limited in this application. When the non-radio information is sent separately from the radio information, the terminal device sends the non-radio information to the network device when determining that the change configuration information is satisfied, and the network device associates subsequently received radio information with received latest non-radio information. When sending the non-radio information based on the change configuration information, the terminal device may send only changed non-radio information, or may send all the non-radio information. This is not limited in this embodiment of this application. Sending only the changed non-radio information can reduce signaling. The network device sends the change configuration information to the terminal device, so that the radio information reported by the terminal device can better match the corresponding non-radio information. CSI-RS measurement is used as an example. If the terminal device is located indoors at a moment 1, first non-radio information obtained when the terminal device measures first CSI reporting information (radio information 1) at the moment 1 is that the terminal device is located indoors. The terminal device is located outdoors at a moment 2, and the terminal device measures second CSI reporting information (radio information 2) at the moment 2. In this case, the terminal device does not report second non-radio information "the terminal device is located outdoors". The network device uses, based on the first non-radio information, the second CSI reporting information as a scenario "the terminal device is located indoors". Consequently, the radio information does not match the non-radio information. The change configuration information sent by the network device to the terminal device is "changing from indoors to outdoors", and indicates that if the terminal device moves from indoors to outdoors, the terminal device needs to send the updated non-radio information, namely, the second non-radio information "the terminal device is located outdoors", to the network device. In this way, the network device can use, based on the second non-radio information, the second CSI reporting information as a scenario "the terminal device is located outdoors", so that the radio information reported by the terminal device better matches the corresponding non-radio information.

S504: The terminal device determines that the change configuration information is satisfied.

After receiving the change configuration information, the terminal device determines, based on the non-radio information, whether the change configuration information is satisfied. For example, if the terminal device determines, based on the non-radio information, that the location of the terminal device changes from indoor to outdoor, or the radio channel type of the terminal device changes from LOS to NLOS, or the quantity of beams of the terminal device increases, and the change configuration information is satisfied, the terminal device sends the changed non-radio information to the network device. For details, refer to the related descriptions in S503.

S505: The terminal device sends the non-radio information to the network device.

The non-radio information is the changed non-radio information. After receiving the changed non-radio information, the network device associates subsequently received radio information with the changed non-radio information. It should be understood that, before S501, the terminal device may further send unchanged non-radio information, and the network device associates the radio information in S501 with the unchanged non-radio information. For brevity, in this embodiment of this application, the step of sending the unchanged non-radio information is omitted.

For specific content of the non-radio information, refer to the descriptions of the non-radio information in S402 in the communication method 400. Details are not described herein again.

Optionally, in S506, the network device processes the radio information based on the non-radio information.

In a possible implementation, the network device classifies the radio information based on the received non-radio information, to obtain a dataset used for AI model processing.

In a possible implementation, the network device directly forwards the received non-radio information and the received radio information to another network entity for subsequent AI model processing.

For specific descriptions, refer to the descriptions in S405. Details are not described herein again.

Optionally, in S507, the network device sends the non-radio information and the radio information to a data collection network element.

The network device may send the radio information and the corresponding non-radio information to the data collection network element. The radio information and the non-radio information may be carried in a same message, or may be carried in different messages. For details, refer to the descriptions in S406. Details are not described herein again.

According to the method provided in this embodiment of this application, the radio information reported by the terminal device better matches the corresponding non-radio information, and the network device can obtain, based on the non-radio information and the radio information, training data that matches an AI model, to improve accuracy of AI model training and inference.

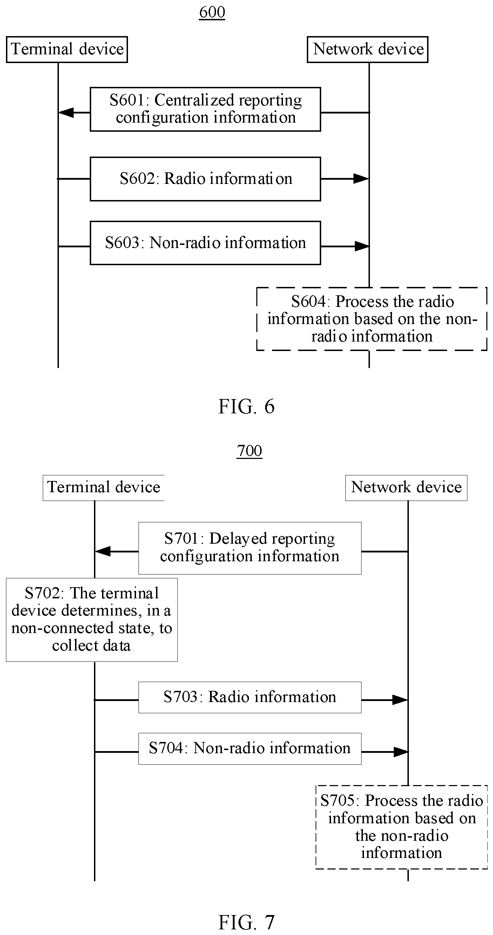

Based on an embodiment of this application corresponding to FIG. 3, FIG. 4, or FIG. 5, FIG. 6 is a schematic flowchart of a communication method 600 according to an embodiment of this application. In FIG. 6, the method is described by using an example in which a network device and a terminal device are execution bodies of the illustrative interaction. However, the execution bodies of the illustrative interaction are not limited in this application. For example, the network device in FIG. 6 may alternatively be a chip, a chip system, or a processor that supports the network device in implementing the method, or may be a logical module or software that can implement all or some functions of the network device. The terminal device in FIG. 6 may alternatively be a chip, a chip system, or a processor that supports the terminal device in implementing the method, or may be a logical module or software that can implement all or some functions of the terminal. The communication method 600 includes but is not limited to the following steps.

S601: The network device sends centralized reporting configuration information to the terminal device.

The centralized reporting configuration information indicates the terminal device to send radio information and/or non-radio information to the network device in a centralized reporting manner. In other words, the centralized reporting configuration information may indicate a centralized reporting manner configured for the radio information, or may be a centralized reporting manner configured for the non-radio information, or may be a centralized reporting manner configured for both the radio information and the non-radio information. For example, when the radio information is reported in the centralized manner, the non-radio information may or may not be reported in the centralized manner. The centralized reporting manner may be as follows: The terminal device in a connected state receives the reporting configuration information sent by the network device, and the terminal device collects the radio information and/or the non-radio information for a period of time or collects at least one piece of the radio information and/or the non-radio information in the connected state based on the reporting configuration information, and sends the radio information and/or the non-radio information to the network device in the connected state.

The centralized reporting configuration information may include at least one piece of the following information: reporting periodicity information, recording interval information, recording time range information, recording condition information, triggering condition configuration information for centralized reporting, a recorded data type, or effective area information for centralized reporting.

The reporting periodicity information indicates periodicity information of periodic and centralized reporting performed by the terminal device.

The recording interval information indicates a time interval for which the terminal device needs to record the radio information and/or the non-radio information.

The recording time range information indicates a time range in which the terminal device can record the radio information, for example, including start time and end time, or the start time and time length information, or the time length information. If the time range information is the time length information, in an example, after the terminal device receives the configuration information, the terminal device starts a timer, and the terminal device collects the radio information within running time of the timer. When the timer reaches the foregoing time length or the timer expires, the terminal device stops collecting the radio information; or during running of the timer, if the terminal device determines that a triggering condition for sending the radio information is satisfied, the terminal device stops collecting the radio information and stops the timer.

The recording condition information indicates a condition in which the terminal device starts to record the radio information. For example, the recording condition information may be a signal quality threshold. When signal quality of a cell or a serving beam is greater than or equal to the signal quality threshold, the communication device starts to record the radio information. Alternatively, the recording condition information may include a first signal quality threshold and a second signal quality threshold. When signal quality of a cell or a serving beam is greater than or equal to the first signal quality threshold and less than or equal to the second signal quality threshold, the communication device starts to record the radio information.

The triggering condition configuration information for centralized reporting indicates a triggering condition for centralized reporting performed by the terminal device. For example, the triggering condition configuration information for centralized reporting may include a capacity threshold and/or a quantity threshold. Correspondingly, the triggering condition may include: radio information stored in the terminal device reaches the quantity threshold, or an amount of stored radio information reaches the capacity threshold. The quantity threshold may be a maximum quantity of pieces of radio information that can be stored by the terminal device. The capacity threshold may be a maximum capacity of radio information stored by the terminal or a threshold approaching the maximum capacity. It may be understood that "approaching the maximum capacity" may mean that a payload of radio information stored by the terminal device is approaching the maximum capacity, and/or that the terminal device determines that a difference between the maximum capacity and a capacity of stored radio information is insufficient to record another piece of complete radio information. The quantity threshold and/or the capacity threshold may be sent by the network device to the terminal device, or may be predefined.

The recorded data type indicates data information that needs to be reported by the terminal device, for example, a CSI-RS measurement result and CSI reporting information. The effective area information for centralized reporting indicates that the terminal device collects information only in the effective area. The effective area information for centralized reporting may include beam information, BWP information, area information, cell information, or other information that indicates a range.

When collecting the radio information and/or the non-radio information in the connected state, the terminal device determines when to report the collected radio information and/or the non-radio information. When the radio information and/or the non-radio information collected by the terminal device satisfies the triggering condition for centralized reporting, for example, when storage reaches the quantity threshold, or when storage of the radio information and/or the non-radio information collected by the terminal device reaches the capacity threshold, the terminal device sends the collected radio information and/or non-radio information in the centralized reporting manner.

S602: The terminal device sends the radio information to the network device.

In a possible implementation, the terminal device sends the radio information to the network device in the centralized reporting manner.

S603: The terminal device sends the non-radio information to the network device.

In a possible implementation, the terminal device sends the non-radio information to the network device in the centralized reporting manner.

Optionally, in S604, the network device processes the radio information based on the non-radio information.

In a possible implementation, the network device classifies the radio information based on the received non-radio information, to obtain a dataset used for AI model processing.

In a possible implementation, the network device directly forwards the received non-radio information and the received radio information to another network entity for subsequent AI model processing.

If the network device includes a first network device unit and a second network device unit, for descriptions about associating the radio information with the corresponding non-radio information by the network device, refer to the descriptions in S302. Details are not described herein again.

According to the method provided in this embodiment of this application, the network device can obtain, at a time, a plurality of pieces of radio information and/or non-radio information collected by the terminal device, to reduce signaling overheads caused by frequently receiving the radio information and/or the non-radio information.

Based on an embodiment of this application corresponding to FIG. 3, FIG. 4, or FIG. 5, FIG. 7 is a schematic flowchart of a communication method 700 according to an embodiment of this application. In FIG. 7, the method is described by using an example in which a network device and a terminal device are execution bodies of the illustrative interaction. However, the execution bodies of the illustrative interaction are not limited in this application. For example, the network device in FIG. 7 may alternatively be a chip, a chip system, or a processor that supports the network device in implementing the method, or may be a logical module or software that can implement all or some functions of the network device. The terminal device in FIG. 7 may alternatively be a chip, a chip system, or a processor that supports the terminal device in implementing the method, or may be a logical module or software that can implement all or some functions of the terminal. The communication method 700 includes but is not limited to the following steps.

S701: The network device sends delayed reporting configuration information to the terminal device.

The delayed reporting configuration information indicates the terminal device to send radio information and/or non-radio information to the network device in a delayed reporting manner. In other words, the delayed reporting configuration information may indicate a delayed reporting manner configured for the radio information, or may be a delayed reporting manner configured for the non-radio information, or may be a delayed reporting manner configured for both the radio information and the non-radio information. For example, when the radio information is reported in a delayed manner, the non-radio information may or may not be reported in a delayed manner. The delayed reporting configuration information further indicates the terminal device to record the radio information and/or the non-radio information based on the delayed reporting configuration information if the terminal device enters a non-connected state.

The delayed reporting configuration information includes at least one type of the following information: reporting periodicity information, recording time range information, recording interval information, recording condition information, a recorded data type, triggering condition configuration information for delayed reporting, or effective area information for delayed reporting. For example, the delayed reporting configuration information may be one type of information: the reporting periodicity information, or may be two types of information: the reporting periodicity information and the recording time range information, or may be one or more types of other information. This is not limited in this embodiment of this application.

The reporting periodicity information indicates periodicity information of periodic and delayed reporting performed by the terminal device. The recording interval information indicates a time interval for which the terminal device needs to record the radio information and/or the non-radio information.

The recording time range information indicates a time range in which the terminal device can record the radio information. For specific content, refer to the descriptions in S601. Details are not described herein again.

The recording interval information indicates a time interval for which the terminal device needs to record the radio information and/or the non-radio information.

The recording condition information indicates a condition in which the terminal device starts to record the radio information. For specific content, refer to the descriptions in S601. Details are not described herein again.

The recorded data type indicates data information that needs to be reported by the terminal device. For specific content, refer to the descriptions in S601. Details are not described herein again.

When the radio information and/or the non-radio information recorded by the terminal device satisfies a triggering condition corresponding to the triggering condition configuration information for delayed reporting, the terminal device records the radio information and/or the non-radio information based on the delayed reporting configuration information.

The triggering condition configuration information may include at least one type of the following information: quality threshold information, a channel type of the terminal device, location information of the terminal device, or other non-radio information-related condition information.

S702: The terminal device determines, in the non-connected state, to collect data.

When the terminal device enters the non-connected state, the terminal device determines, based on the delayed reporting configuration information, whether to collect data. For example, the triggering condition configuration information for delayed reporting is that the quality of a serving cell exceeds or is equal to a first cell quality threshold. When the terminal device is in the non-connected state (an idle state or an inactive state), and determines that current quality of the serving cell satisfies the triggering condition configuration information, the terminal device records the radio information and/or the non-radio information. If the triggering condition configuration information is that the channel type of the terminal device is LOS, when the terminal device determines that the channel type is LOS, and the terminal device is in the non-connected state, the terminal device records the radio information and/or the non-radio information.

S703: The terminal device sends the radio information to the network device.

When the terminal device enters a connected state, the terminal device may send the radio information to the network device.

The terminal device sends the radio information to the network device in the delayed reporting manner.

S704: The terminal device sends the non-radio information to the network device.

When the terminal device enters the connected state, the terminal device sends the non-radio information to the network device.

The terminal device sends the non-radio information to the network device in the delayed reporting manner.

Optionally, in S705, the network device processes the radio information based on the non-radio information.

In a possible implementation, the network device classifies the radio information based on the received non-radio information, to obtain a dataset used for AI model processing.

In a possible implementation, the network device directly forwards the received non-radio information and the received radio information to another network entity for subsequent AI model processing.

If the network device includes a first network device unit and a second network device unit, for descriptions about associating the radio information with the corresponding non-radio information by the network device, refer to the descriptions in S302. Details are not described herein again.

According to the method provided in this embodiment of this application, the terminal device can also collect the radio information and/or the non-radio information in the non-connected state, to provide more comprehensive AI data for the network device, so that the network device can perform AI model training/inference/optimization in more scenarios.

It should be understood that the method in the embodiment in FIG. 6 or FIG. 7 may be combined with the method in the embodiment in FIG. 3, FIG. 4, or FIG. 5. For example, the centralized reporting manner in the embodiment in FIG. 6 may be combined with the radio information and/or non-radio information reporting manner in the embodiment in FIG. 3, FIG. 4, or FIG. 5, or the delayed reporting manner in the embodiment in FIG. 7 may be combined with the radio information and/or non-radio information reporting manner in the embodiment in FIG. 3, FIG. 4, or FIG. 5. In this way, a problem that accuracy of AI model training, inference, or optimization is not high because training data does not match an AI model can be resolved, and a problem of signaling overheads caused by an existing radio information reporting mechanism can be resolved.

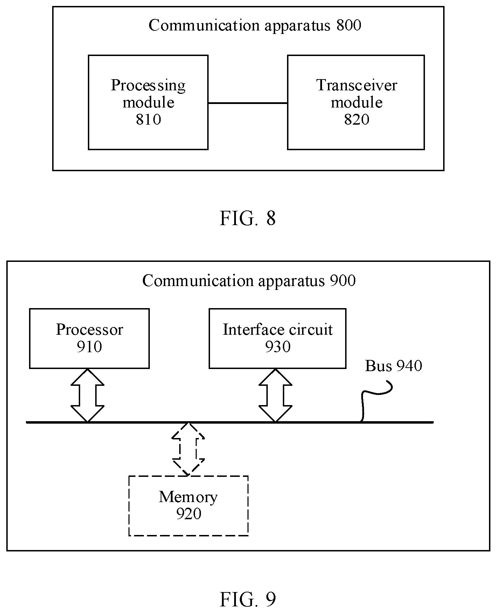

FIG. 8 is a block diagram of a communication apparatus according to an embodiment of this application. The communication apparatuses may be configured to implement functions of the communication apparatus in the foregoing method embodiments, and therefore can also implement beneficial effects of the foregoing method embodiments. In embodiments of this application, the communication apparatus may be a terminal device, or may be a module (such as a chip) used in the terminal device, or may be software that can implement all or some functions of the terminal device.

As shown in FIG. 8, the communication apparatus 800 includes a processing module 810 and an interface module 820. The communication apparatus 800 is configured to implement the functions of the terminal device in any one of the embodiments in FIG. 3 to FIG. 7.

When the communication apparatus 800 is configured to implement the functions of the terminal device in any one of the embodiments in FIG. 3 to FIG. 7, for example:

The interface module 820 is configured to send radio information, where the radio information is measurement information obtained by the terminal device.

The interface module 820 is further configured to send radio information, where the non-radio information is non-radio information corresponding to the radio information, and the non-radio information indicates physical environment information related to the radio information.

The non-radio information may include at least one of the following: location information of the terminal device, device information of the terminal device, channel type information of the terminal device, antenna configuration information of a cell, network deployment information, cell configuration information, beam configuration information, or bandwidth part (BWP) information.

The radio information may include at least one of the following: cell measurement result information, beam measurement result information, channel state information (CSI) feedback information, or positioning information.

The interface module 820 is further configured to receive first indication information, where the first indication information indicates whether to report the non-radio information.

The interface module 820 is further configured to receive the antenna configuration information of the cell and/or network deployment information.

The interface module 820 is further configured to receive change configuration information of the non-radio information, where the change configuration information indicates condition information for determining whether to report the non-radio information.

The interface module 820 is further configured to send changed non-radio information.

The change configuration information includes at least one triggering condition configuration and second indication information, and the second indication information indicates combination information corresponding to the at least one triggering condition configuration.

The combination information includes at least one of the following: any piece of the non-radio information satisfies the at least one triggering condition configuration; each piece of the non-radio information satisfies the at least one triggering condition configuration; or at least two pieces of the non-radio information satisfy the at least one triggering condition configuration.

The interface module 820 is further configured to receive centralized reporting configuration information, where the centralized reporting configuration information indicates the terminal device to send the radio information and/or the non-radio information in a centralized reporting manner, and the centralized reporting manner is that the terminal device collects the radio information and/or the non-radio information for a period of time or collects at least one piece of the radio information and/or the non-radio information in a connected state, and sends the radio information and/or the non-radio information in the connected state.

That the terminal device sends the radio information and/or the non-radio information in the centralized reporting manner includes: when storage of the radio information and/or the non-radio information reaches a quantity threshold, or when storage of the radio information and/or the non-radio information reaches a capacity threshold, sending the radio information and/or the non-radio information in the centralized reporting manner.

The centralized reporting configuration information includes at least one of the following: reporting periodicity information, recording interval information, recording time range information, recording condition information, triggering condition configuration information for centralized reporting, a recorded data type, or effective area information for centralized reporting.

The triggering condition configuration information for centralized reporting includes the quantity threshold or the capacity threshold.

The interface module 820 is further configured to receive delayed reporting configuration information, where the delayed reporting configuration information indicates the terminal device to record the radio information and/or the non-radio information based on the delayed reporting configuration information if the terminal device enters a non-connected state.

The delayed reporting configuration information includes at least one of the following: reporting periodicity information, recording time range information, recording interval information, recording condition information, a recorded data type, triggering condition configuration information for delayed reporting, or effective area information for delayed reporting.

The triggering condition configuration information for delayed reporting includes at least one of quality threshold information, a channel type of the terminal device, location information of the terminal device, or other non-radio information related to the terminal device.

The processing module 810 may be configured to determine whether the radio information and/or the non-radio information satisfy/satisfies a triggering condition corresponding to the triggering condition configuration information for delayed reporting.

The processing module 810 may be configured to determine whether the radio information and/or the non-radio information satisfy/satisfies the change configuration information.

The foregoing is merely a part of an example when the communication apparatus 800 is configured to implement the functions of the terminal device in any embodiment in FIG. 3 to FIG. 7. For functions of the processing module 810 and the interface module 820 in the communication apparatus 800, refer to operations of the terminal device in any embodiment in FIG. 3 to FIG. 7.

The communication apparatus 800 may be further configured to implement the functions of the network device in any one of the embodiments in FIG. 3 to FIG. 7. When the communication apparatus 800 is configured to implement the functions of the network device in any one of the embodiments in FIG. 3 to FIG. 7, for example:

The interface module 820 is configured to receive radio information, where the radio information is measurement information obtained by a terminal device.

The interface module 820 is further configured to receive non-radio information, where the non-radio information is non-radio information corresponding to the radio information, and the non-radio information indicates physical environment information related to the radio information.

The non-radio information may include at least one of the following: location information of the terminal device, device information of the terminal device, channel type information of the terminal device, antenna configuration information of a cell, network deployment information, cell configuration information, beam configuration information, or bandwidth part (BWP) information.

The radio information may include at least one of the following: cell measurement result information, beam measurement result information, channel state information (CSI) feedback information, or positioning information.

The interface module 820 is further configured to send first indication information, where the first indication information indicates whether to report the non-radio information.

The interface module 820 is further configured to send the antenna configuration information of the cell and/or the network deployment information.

The interface module 820 is further configured to send change configuration information of the non-radio information, where the change configuration information indicates condition information for determining whether to report the non-radio information.

The change configuration information includes at least one triggering condition configuration and second indication information, and the second indication information indicates combination information corresponding to the at least one triggering condition configuration.

The combination information includes at least one of the following: any piece of the non-radio information satisfies the at least one triggering condition configuration; each piece of the non-radio information satisfies the at least one triggering condition configuration; or at least two pieces of the non-radio information satisfy the at least one triggering condition configuration.

The interface module 820 is further configured to send centralized reporting configuration information, where the centralized reporting configuration information indicates the terminal device to send the radio information and/or the non-radio information in a centralized reporting manner.

The centralized reporting configuration information includes at least one of the following: reporting periodicity information, recording interval information, recording time range information, recording condition information, triggering condition configuration information for centralized reporting, maximum capacity information of storage data, maximum quantity information of storage data, a recorded data type, or effective area information for centralized reporting.

The triggering condition configuration information for centralized reporting includes a quantity threshold or a capacity threshold.

The interface module 820 is further configured to send delayed reporting configuration information, where the delayed reporting configuration information indicates the terminal device to send the radio information and/or the non-radio information in a delayed reporting manner.

The delayed reporting configuration information includes at least one of the following: reporting periodicity information, recording time range information, recording interval information, recording condition information, a recorded data type, triggering condition configuration information for delayed reporting, or effective area information for delayed reporting.

The triggering condition configuration information for delayed reporting includes at least one of quality threshold information, a channel type of the terminal device, location information of the terminal device, or other non-radio information related to the terminal device.

The interface module 820 is further configured to receive radio information and/or corresponding non-radio information from another network device.

The processing module 810 may be configured to classify the radio information based on the non-radio information, to obtain a dataset used for artificial intelligence (AI) model processing.

The processing module 810 is further configured to perform AI model training, inference, or update based on the dataset.

The foregoing is merely a part of an example when the communication apparatus 800 is configured to implement the functions of the network device in any embodiment in FIG. 3 to FIG. 7. For functions of the processing module 810 and the interface module 820 in the communication apparatus 800, refer to operations of the network device in any embodiment in FIG. 3 to FIG. 7. It may be understood that the processing module 810 may be implemented by a processor, and the interface module may be implemented by a transceiver.

Optionally, the communication apparatus 800 may further include a storage module, configured to store a program, instructions, or data.

FIG. 9 is another block diagram of a communication apparatus according to an embodiment of this application. As shown in FIG. 9, the communication apparatus 900 includes a processor 910 and an interface circuit 930. The processor 910 and the interface circuit 930 are coupled to each other. It may be understood that the interface circuit 930 may be a transceiver or an input/output interface.

Optionally, the communication apparatus 900 may further include a memory 920, configured to store instructions executed by the processor 920, or store input data required by the processor 910 to run the instructions, or store data generated after the processor 910 runs the instructions.

When the communication apparatus 900 is configured to implement the functions of the terminal device or the network device shown in any one of the embodiments in FIG. 3 to FIG. 7, the processor 910 is configured to implement the functions of the processing module 810, and the interface circuit 930 is configured to implement the functions of the interface module 820.

Optionally, the communication apparatus 900 further includes a bus 940. The processor 910, the interface circuit 930, and the memory 920 may communicate with each other through the bus 940.

An embodiment of this application further provides a communication apparatus. The communication apparatus includes a memory and a processor. The memory is configured to store instructions executed by the processor, or store input data required by the processor to run the instructions, or store data generated after the processor runs the instructions. The processor is configured to implement a function of the processing module 810.

An embodiment of this application further provides a system chip. The system chip includes an input/output interface, at least one processor, at least one memory, and a bus. The at least one memory is configured to store instructions, and the at least one processor is configured to invoke instructions in the at least one memory, to perform operations of the methods in the foregoing aspects.

When the system chip is a chip used in a terminal, the chip in the terminal implements the functions of the terminal in the foregoing method embodiments. The chip receives information from another module (for example, a radio frequency module or an antenna) in the terminal, where the information is from another terminal or a network device. Alternatively, the chip sends information to another module (for example, the radio frequency module or the antenna) in the terminal, where the information is sent by the terminal to another terminal or a network device.

When the system chip is a chip used in a network device, the chip implements the functions of the network device in the foregoing method embodiments. The chip receives information from another module (for example, a radio frequency module or an antenna) in the network device, where the information is from another network device or a terminal. Alternatively, the chip sends information to another module (for example, the radio frequency module or the antenna) in the network device, where the information is sent by the network device to another network device or a terminal.

An embodiment of this application further provides a communication system, including a network device and a terminal device. The terminal device is configured to implement the functions of the terminal device in any one of the embodiments in FIG. 3 to FIG. 7, and the network device is configured to implement the functions of the network device in any one of the embodiments in FIG. 3 to FIG. 7. Optionally, the communication system further includes a data collection network element, and the network device sends radio information and non-radio information to the data collection network element for data processing.

A person of ordinary skill in the art may understand that various numbers such as first and second in this application are merely used for differentiation for ease of description, and are not used to limit the scope of embodiments of this application or represent a sequence. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. "At least one" means one or more. "At least two" means two or more. "At least one", "any one", or a similar expression thereof indicates any combination of the items, and includes a singular item (piece) or any combination of plural items (pieces). For example, at least one (type) of a, b, or c may represent: a, b, c, a and b, a and c, b and c, or a, b, and c, where a, b, and c may be singular or plural. "A plurality of" means two or more, and another quantifier is similar to this.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like.

Steps of the methods described in embodiments of this application may be directly embedded into hardware, a software unit executed by the processor, or a combination thereof. The software unit may be stored in a random access memory (random access memory, RAM), a flash memory, a read-only memory (read-only memory, ROM), a register, a hard disk drive, a removable disk, or a storage medium in any other form in the art. For example, the storage medium may connect to a processor so that the processor may read information from the storage medium and write information to the storage medium. Alternatively, the storage medium may be integrated into a processor. The processor and the storage media may be disposed in an ASIC.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

For same or similar parts in embodiments of this application, refer to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship thereof. The foregoing implementations of this application are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
sending radio information, wherein the radio information is measurement information obtained by a terminal device; and
sending non-radio information, wherein the non-radio information is non-radio information corresponding to the radio information, and the non-radio information indicates physical environment information related to the radio information.

2. The method according to claim 2, wherein the method further comprises:
receiving first indication information, wherein the first indication information indicates whether to report the non-radio information.

3. The method according to claim 1 or 2, wherein the method further comprises:
receiving antenna configuration information of a cell and/or network deployment information.

4. The method according to any one of claims 1 to 3, wherein the method further comprises:
receiving change configuration information of the non-radio information, wherein the change configuration information indicates condition information for determining whether to report the non-radio information; and
if it is determined that the condition information is satisfied, sending changed non-radio information.

5. The method according to any one of claims 1 to 4, wherein the method further comprises:
receiving centralized reporting configuration information, wherein the centralized reporting configuration information indicates the terminal device to send the radio information and/or the non-radio information in a centralized reporting manner, and the centralized reporting manner is that the terminal device collects the radio information and/or the non-radio information for a period of time or collects at least one piece of the radio information and/or the non-radio information in a connected state, and sends the radio information and/or the non-radio information in the connected state.

6. The method according to claim 5, wherein that the terminal device sends the radio information and/or the non-radio information in the centralized reporting manner comprises:
when storage of the radio information and/or the non-radio information reaches a quantity threshold, or when storage of the radio information and/or the non-radio information reaches a capacity threshold, sending the radio information and/or the non-radio information in the centralized reporting manner.

7. The method according to any one of claims 1 to 6, wherein the method further comprises:
receiving delayed reporting configuration information, wherein the delayed reporting configuration information indicates to record the radio information and/or the non-radio information based on the delayed reporting configuration information if the terminal device enters a non-connected state.

8. The method according to claim 7, wherein the method further comprises:
determining that a triggering condition corresponding to configuration information of the triggering condition of delayed reporting is satisfied, and recording the radio information and/or the non-radio information based on the delayed reporting configuration information.

9. A communication method, comprising:
receiving radio information, wherein the radio information is measurement information obtained by a terminal device; and
receiving non-radio information, wherein the non-radio information is non-radio information corresponding to the radio information, and the non-radio information indicates physical environment information related to the radio information.

10. The method according to claim 9, wherein the method further comprises:
classifying the radio information based on the non-radio information, to obtain a dataset used for artificial intelligence AI model processing.

11. The method according to claim 9 or 10, wherein the method further comprises:
performing AI model training, inference, or update based on the dataset.

12. The method according to any one of claims 9 to 11, wherein the method further comprises:
sending first indication information, wherein the first indication information indicates whether to report the non-radio information.

13. The method according to any one of claims 9 to 12, wherein the method further comprises:
sending antenna configuration information of a cell and/or network deployment information.

14. The method according to any one of claims 9 to 12, wherein the method further comprises:
sending change configuration information of the non-radio information, wherein the change configuration information indicates condition information for determining whether to report the non-radio information.

15. The method according to any one of claims 9 to 14, wherein the method further comprises:
sending centralized reporting configuration information, wherein the centralized reporting configuration information indicates the terminal device to send the radio information and/or the non-radio information in a centralized reporting manner.

16. The method according to any one of claims 9 to 14, wherein the method further comprises:
sending delayed reporting configuration information, wherein the delayed reporting configuration information indicates the terminal device to send the radio information and/or the non-radio information in a delayed reporting manner.

17. The method according to any one of claims 9 to 16, wherein the method further comprises:
receiving radio information and/or corresponding non-radio information from another network device.

18. The method according to any one of claims 1 to 17, wherein
the non-radio information comprises at least one of the following: location information of the terminal device, device information of the terminal device, channel type information of the terminal device, the antenna configuration information of the cell, the network deployment information, cell configuration information, beam configuration information, or bandwidth part BWP information.

19. The method according to any one of claims 1 to 18, wherein the radio information comprises at least one of the following: cell measurement result information, beam measurement result information, channel state information CSI feedback information, or positioning information.

20. The method according to claim 4 or 14, wherein the change configuration information comprises at least one triggering condition configuration and second indication information, and the second indication information indicates combination information corresponding to the at least one triggering condition configuration.

21. The method according to claim 20, wherein the combination information comprises at least one of the following:
any piece of the non-radio information satisfies the triggering condition configuration;
each piece of the non-radio information satisfies the triggering condition configuration; or
at least two pieces of the non-radio information satisfy the triggering condition configuration.

22. The method according to claim 6 or 15, wherein the centralized reporting configuration information comprises at least one of the following: reporting periodicity information, recording interval information, recording time range information, recording condition information, triggering condition configuration information for centralized reporting, a recorded data type, or effective area information for centralized reporting.

23. The method according to claim 22, wherein the triggering condition configuration information for centralized reporting comprises a quantity threshold or a capacity threshold.

24. The method according to claim 7 or 16, wherein the delayed reporting configuration information comprises at least one of the following: reporting periodicity information, recording time range information, recording interval information, recording condition information, recorded data type, triggering condition configuration information for delayed reporting, or effective area information for delayed reporting.

25. The method according to claim 24, wherein the triggering condition configuration information for delayed reporting comprises at least one of quality threshold information, a channel type of the terminal device, location information of the terminal device, or other non-radio information related to the terminal device.

26. A communication apparatus, comprising a communication unit and a processing unit, wherein
the communication unit is configured to input and/or output signaling or data; and
the processing unit is configured to perform, through the communication unit, the method according to any one of claims 1 to 8, or the method according to any one of claims 9 to 17, or the method according to any one of claims 18 to 25.

27. A communication apparatus, comprising a communication interface and a processor, wherein
the communication interface is configured to input and/or output signaling or data; and
the processor is configured to execute a computer-executable program, to perform the method according to any one of claims 1 to 8, the method according to any one of claims 9 to 17, or the method according to any one of claims 18 to 25.

28. A communication apparatus, comprising a processor and a memory, wherein
the memory is configured to store a computer program or instructions; and
the processor is configured to execute the computer program or the instructions in the memory, to perform the method according to any one of claims 1 to 8, the method according to any one of claims 9 to 17, or the method according to any one of claims 18 to 25.

29. A computer-readable storage medium, wherein the computer-readable storage medium stores computer-executable instructions, and when the computer-executable instructions are invoked by a computer, the method according to any one of claims 1 to 8 is performed, the method according to any one of claims 9 to 17 is performed, or the method according to any one of claims 18 to 25 is performed.

30. A chip system, comprising a communication interface and a processor, wherein
the communication interface is configured to input and/or output signaling or data; and
the processor is configured to execute a computer-executable program, to cause a device on which the chip system is installed to perform the method according to any one of claims 1 to 8, perform the method according to any one of claims 9 to 17, or perform the method according to any one of claims 18 to 25.

31. A communication system, comprising a communication apparatus configured to perform the method according to any one of claims 1 to 8, and a communication apparatus configured to perform the method according to any one of claims 9 to 17.
